# EUROPÄISCHE PATENTSCHRIFT

(11) **EP 1 892 810 B1**
(45) Veröffentlichungstag und Bekanntmachung des Hinweises auf die Patenterteilung: **18.05.2011**
(21) Anmeldenummer: 06405368.9
(22) Anmeldetag: 25.08.2006
(51) Int. Cl.: H02G 5/10

(54) **Kühleinrichtung für ein elektrisches Betriebsmittel**
Cooling device for electrical installation
Dispositif de refroidissement pour appareillage électrique

(43) Veröffentlichungstag der Anmeldung: 27.02.2008
(73) Patentinhaber: ABB RESEARCH LTD., 8050 Zürich (CH)
(72) Erfinder: Unternaehrer, Peter, 5436 Würenlos (CH); Lakner, Martin, 5412 Gebenstorf (CH); Mauroux, Jean-Claude, 5502 Hunzenschwil (CH); Chartouni, Daniel, 5400 Baden (CH); Buehler, Tilo, 5430 Wettingen (CH); Just, Davis, 5408 Ennetbaden (CH)
(74) Vertreter: ABB Patent Attorneys

(56) Entgegenhaltungen:
- EP-A- 1 657 731
- US-A- 2 230 427

## Beschreibung

### Technisches Gebiet

Die Erfindung betrifft eine Kühleinrichtung, insbesondere eine Kühleinrichtung für ein elektrisches Betriebsmittel und ein elektrisches Betriebsmittel mit einer daran befestigten Kühleinrichtung, sowie ein Verfahren zur Herstellung einer Kühleinrichtung, insbesondere einer Kühleinrichtung für ein elektrisches Betriebsmittel.

### Stand der Technik

Aus K. Albert et al., Elektrischer Eigenbedarf / Energietechnik in Kraftwerken und Industrie, VDE-Verlag, ISBN 3-8007-1586-4, Kapitel 10.3 (Seiten 431-455) sind Generatorableitungen mit forcierter Kühlung bekannt. Zur Kühlung des Innenleiters der Generatorableitung wird mittels Gebläsen ein Luftstrom erzeugt. Weiterhin ist aus EP 1 022 830 A1 bekannt, zur Kühlung eines gehäusten Innenleiters eines Hochleistungsschalters ein Gebläse vorzusehen.

Bei diesen und anderen Kühlungen ist die Verbindung zwischen der Kühlung und dem zu kühlenden Teil für den Dauerbetrieb verbesserungswürdig. Die Verbindung hat beispielsweise nicht immer optimale Wärmeleitungseigenschaften und begrenzt daher die erzielbare Kühlwirkung. Auch sind die Wärmeleitungseigenschaften nicht immer im Langzeitbetrieb stabil. Daher kann ein zuverlässiger Dauerbetrieb nur bei regelmässiger aufwändiger Diagnose und gegebenenfalls Wartung dieser Verbindung gewährleistet werden.

### Darstellung der Erfindung

Die vorliegende Erfindung versucht zumindest einige der oben genannten Probleme zu mindern. Die Aufgabe wird gelöst durch die Kühleinrichtung gemäß dem unabhängigen Anspruch 1, durch das elektrische Betriebsmittel mit Kühlung gemäß dem abhängigen Anspruch 12, und durch das Verfahren zur Herstellung einer Kühleinrichtung gemäß dem unabhängigen Anspruch 13. Weitere Vorteile, Merkmale, Aspekte und Details der Erfindung sowie bevorzugte Ausführungen und besondere Aspekte der Erfindung ergeben sich aus den Unteransprüchen, der Beschreibung und den Figuren.

Gemäss einem Aspekt der Erfindung wird eine Kühleinrichtung für ein elektrisches Betriebsmittel vorgeschlagen, das eine zu kühlende Oberfläche aufweist. Die Kühleinrichtung umfasst ein Kühlmittel. Die Kühleinrichtung umfasst weiterhin eine Umwandung, deren Inneres ein Volumen für das Kühlmittel definiert, sowie eine Befestigung zum Befestigen der Kühleinrichtung an dem elektrischen Betriebsmittel. Die Umwandung weist eine wärmeleitende Kontaktwand mit einer Kontaktfläche auf. Die Kontaktfläche ist für einen flächigen Kontakt mit der zu kühlenden Oberfläche gestaltet, d.h. sie erlaubt einen flächigen Kontakt zwischen der Kontaktfläche und der zu kühlenden Oberfläche. Der flächige Kontakt erfordert nicht, dass sämtliche Bereiche der Kontaktfläche die zu kühlende Oberfläche berühren müssen. Stattdessen wird ein flächiger Kontakt unabhängig beispielsweise von kleinen Mikro-Unebenheiten definiert. Für den flächigen Kontakt ist es weiterhin nicht zwingend erforderlich, dass die Kontaktfläche die zu kühlende Oberfläche überhaupt berührt; vielmehr liegt ein solcher Kontakt beispielsweise auch dann vor, wenn sich Wärmeleitpaste oder ein anderes Material zwischen den Flächen befindet. Somit genügt es für den flächigen Kontakt, wenn zumindest ein flächiger Bereich der Kontaktfläche an die zu kühlende Oberfläche im Wesentlichen formangepasst ist. Die Kühleinrichtung umfasst weiterhin ein Anpressmittel. Das Anpressmittel spannt die Kontaktwand vor, um einen flächigen, d.h. über eine Fläche verteilten, Anpressdruck der Kontaktfläche gegen die zu kühlende Oberfläche zu erzeugen, wenn die Kühleinrichtung an dem elektrischen Betriebsmittel befestigt ist.

Durch den Anpressdruck kann eine kraftschlüssige Verbindung zumindest eines Teils der Kontaktfläche mit der zu kühlenden Oberfläche erreicht werden. Durch die kraftschlüssige Verbindung kann selbst in Gegenwart von Fertigungstoleranzen oder von sonstigen Oberflächenunebenheiten ein guter und über lange Zeiträume stabiler thermischer Kontakt zwischen der Kontaktfläche und der zu kühlenden Oberfläche erzielt werden. Das Anpressmittel ermöglicht es, dass die Kontaktwand dünn und somit besonders wärmeleitend gestaltet werden kann und dennoch an der zu kühlenden Oberfläche anliegt.

Gemäss einem weiteren Aspekt der Erfindung wird ein elektrisches Betriebsmittel mit einer Kühleinrichtung vorgeschlagen. Die Kühleinrichtung ist mittels einer Befestigung an dem elektrischen Betriebsmittel befestigt und weist die in den vorangegangenen Abschnitten bzw. in Anspruch 1 beschriebenen Merkmale auf.

Gemäss einem weiteren Aspekt der Erfindung wird ein Verfahren zur Herstellung einer Kühleinrichtung für ein elektrisches Betriebsmittel mit den in Anspruch 13 definierten Schritten vorgeschlagen.

Das Anpressmittel kann dazu dienen, eine kraftschlüssige Verbindung zwischen der Kontaktwand und der zu kühlenden Oberfläche herzustellen. Hierfür weist in Ausführungsformen die Kontaktwand einen flexiblen oder sogar einen federnden Bereich mit einer variablen und typischerweise druck- bzw. kraftabhängigen Auslenkung auf. Der federnde Bereich der Kontaktwand kann eine Auslenkung von mehr als 0,001 mm pro 1 N Normalkraft bzw. von mehr als 1 mm pro 1 bar Druck auf den Bereich haben. In der Regel ist die druck- bzw. kraftabhängige Auslenkung normal zur Oberfläche gerichtet. Das Anpressmittel wirkt dann auf den flexiblen Bereich der Kontaktwand und kann insbesondere den beweglichen Bereich an die zu kühlende Oberfläche anpressen.

In Ausführungsformen ist das Anpressmittel eine Feder. Dies kann eine Spiralfeder, eine Blattfeder, eine Tellerfeder oder eine sonstige Feder sein. Die Feder kann integral mit der Umwandung geformt oder separat sein. Die Feder kann an der Umwandung befestigt oder unbefestigt sein. Vorzugsweise ist das Anpressmittel in dem Volumen für das Kühlmittel bzw. im Inneren der Umwandung angeordnet ist oder grenzt unmittelbar an das Volumen bzw. an das Innere an. Besonders bevorzugt ist das Anpressmittel vollständig in dem Volumen für das Kühlmittel bzw. im Inneren der Umwandung angeordnet. Das Anpressmittel enthält vorzugsweise Metall und besonders bevorzugt Stahl.

In Ausführungsformen ist das Anpressmittel angeordnet, um einen Gegendruck zu dem Anpressdruck auf die Umwandung zu übertragen. Hierdurch ist eine kompakte und stabile Konstruktion möglich. In besonderen Ausführungsformen wird der Gegendruck zu dem Anpressdruck auf eine der Kontaktwand gegenüberliegenden Wand der Umwandung übertragen.

In Ausführungsformen ist das elektrische Betriebsmittel ein Schalter, ein Transformator oder ein Überspannungsableiter. Beispielsweise ist das elektrische Betriebsmittel ein Leistungsschalter, insbesondere ein Hochleistungsschalter beispielsweise einer Hochspannungsanlage. Das elektrische Betriebsmittel kann ein Generatorschalter sein.

In Ausführungsformen ist das Kühlmittel flüssig und / oder gasförmig. In Ausführungsformen ist zum Erreichen der Kühlwirkung ein Phasenübergang zwischen einer flüssigen Phase und einer gasförmigen Phase des Kühlmittels vorgesehen. Das Kühlmittel wird dann beispielsweise durch Aufnahme von Wärmeenergie der zu kühlenden Oberfläche verdampft und unter Abgabe von Wärme an die Umgebung kondensiert.

In Ausführungsformen ist die Kühleinrichtung eine passive Kühleinrichtung, beispielsweise ein Wärmerohr oder ein Wärmesiphon. In einigen solchen Ausführungsformen bildet die Umwandung einen Verdampfer zum Verdampfen des Kühlmittels, und die Kühleinrichtung umfasst weiter einen mit dem Verdampfer verbundenen Kondensator zum Kondensieren des Kühlmittels, der eine Vorrichtung zur Wärmeabgabe an die Umgebung aufweist, beispielsweise eine Kühlrippenanordnung. Diese Ausführungsformen haben den Vorteil, dass ohne oder mit geringem Energieverbrauch eine effiziente Kühlwirkung erbracht werden kann.

In Ausführungsformen umfasst die Kühleinrichtung mehrere Verdampfer mit jeweils mindestens einer Kontaktfläche, die miteinander fluid verbunden sind.

In Ausführungsformen ist das Kühlmittel in dem durch das Innere der Umwandung definierten Volumen enthalten. In Ausführungsformen ist das Innere der Umwandung von der Umgebung oder von der Umgebungsluft gasdicht abgeschlossen. Somit kann verhindert werden, dass das Kühlmittel in die Umgebung gelangt und somit die Kühlwirkung reduziert wird. Auch wird eine möglicherweise umweltschädigende Wirkung des Kühlmittels reduziert.

In Ausführungsformen ist die Kühleinrichtung an dem elektrischen Betriebsmittel befestigt. Optional ist eine Wärmeleitpaste zwischen der Kontaktfläche und der zu kühlenden Oberfläche vorhanden.

In Ausführungsformen weist die Kontaktwand ein Basismaterial und eine Beschichtung auf. Das Basismaterial kann beispielsweise Kupfer, Aluminium oder Stahl enthalten. Die Beschichtung ist in der Regel auf der Seite der Kontaktfläche angeordnet. Die Beschichtung ist üblicherweise weicher als das Basismaterial, d.h. es hat eine geringere Brinellhärte als das Basismaterial. Die Beschichtung kann Silber enthalten. Die Beschichtung hat den Vorteil, dass sie kleine Unebenheiten der Kontaktfläche oder der zu kühlenden Oberfläche ausgleichen kann, und dass dennoch eine stabile Konstruktion der Kontaktwand aus einem geeigneten Material möglich ist.

In der Regel hat die Vorspannung eine Komponente in einer zur Kontaktfläche normalen und zum Äusseren der Umwandung hin gerichteten Richtung.

In Ausführungsformen ist die Kühleinrichtung so geformt, dass sie sich bis ausserhalb des elektrischen Betriebsmittels erstreckt, wenn die Kühleinrichtung an dem elektrischen Betriebsmittel befestigt ist.

In Ausführungsformen liegt der Druck des Kühlmittels bzw. der Druck im Inneren der Umwandung bei vorgesehenen Betriebsbedingungen nicht unterhalb eines Minimaldrucks, und der Anpressdruck ist grösser und optional um mehr als 0,2 bar oder sogar um mehr als 0,5 bar grösser als die Differenz zwischen dem Druck der Umgebung, etwa der Umgebungsluft, und dem Minimaldruck. In Ausführungsformen beträgt der Anpressdruck des Anpressmittels mehr als 0,5 bar, typischerweise mehr als 1 bar oder sogar mehr als 2 bar.

In Ausführungsformen ist die Kontaktwand dünner als 1 mm. In Ausführungsformen erzeugt das Anpressmittel den Anpressdruck in einem Bereich der Kontaktfläche, der dünner als 1mm ist. In Ausführungsformen besitzt die Kontaktwand eine Wärmeleitfähigkeit, die weniger als 80 W / (m x K) beträgt. In Ausführungsformen beträgt der Flächeninhalt der Kontaktfläche mehr als 10 cm².

### Kurze Beschreibung der Figuren

Im Weiteren soll die Erfindung anhand von allgemeinen Eigenschaften und anhand von einzelnen in den Figuren dargestellten Ausführungsbeispielen erläutert werden. Dazu zeigen:
- Figur 1 eine schematische Ansicht zur Illustration der Funktionsweise einer Kühleinrichtung;
- Figuren 2a und 2b jeweils eine Querschnittsansicht eines elektrischen Betriebsmittels mit daran befestigter Kühleinrichtung;
- Figur 3a eine schematische Ansicht einer nicht erfindungsgemässen Kühleinrichtung ohne Anpressmittel;
- Figur 3b eine schematische Ansicht einer erfindungsgemässen Kühleinrichtung mit Anpressmittel;
- Figur 4 ein Messdiagramm, das einen Vergleich zwischen der Kühlwirkung der Kühleinrichtungen von Figur 3a und von Figur 3b erlaubt; und
- Figuren 5 bis 7 schematische Ansichten weiterer erfindungsgemässer Kühleinrichtungen.

### Wege zur Ausführung der Erfindung

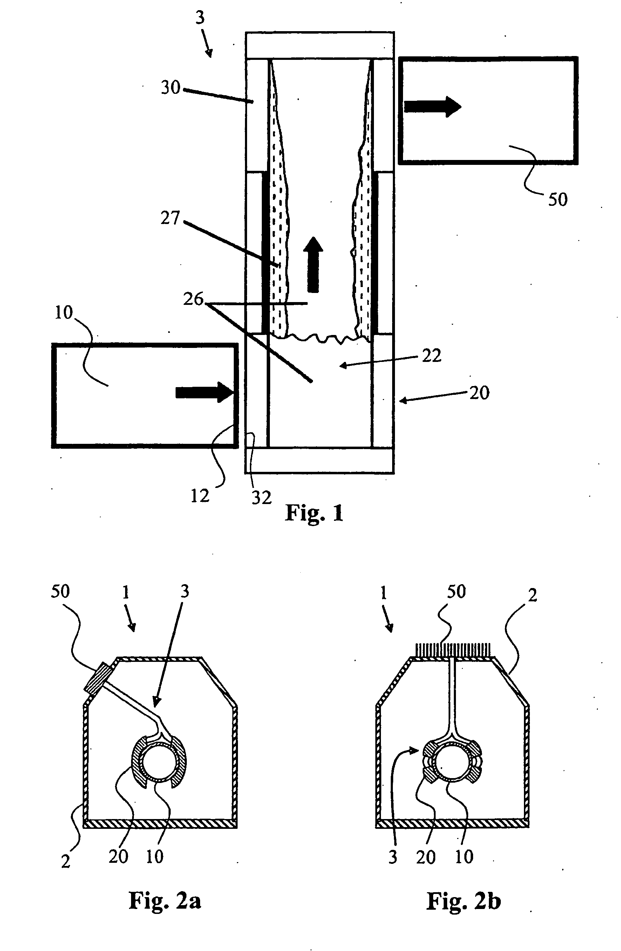

Fig. 1 zeigt eine schematische Ansicht eines Wärmesiphons 3 zum Kühlen einer Wärmequelle 10, z.B. eines elektrischen Betriebsmittels. Die Wärmequelle 10 weist eine zu kühlende Oberfläche 12 auf, durch die Wärme von der Wärmequelle 10 an den Wärmesiphon 3 abgegeben wird. Der Wärmesiphon 3 umfasst eine Umwandung 30, in deren innerem Volumen 22 ein Kühlmittel 26 enthalten ist. Das innere Volumen 22 ist im Allgemeinen gasdicht von der Umgebung abgeschlossen. Damit das Kühlmittel 26 auch im Langzeitbetrieb nicht entweicht, genügt die Abdichtung des Volumens 22 den Anforderungen für Hochvakuum.

Der untere Bereich des Wärmesiphons 3 ist als Verdampfer 20 ausgebildet. Der Verdampfer 20 steht in thermischem Kontakt mit der Wärmequelle 10. Zu diesem Zweck ist ein Teil der Umwandung 30 als Kontaktwand 32 mit einer Kontaktfläche ausgebildet. Die Kontaktfläche steht mit der zu kühlenden Oberfläche 12 der Wärmequelle 10 in flächigem Kontakt. Ein oberer Bereich des Wärmesiphons 3 ist mit einer Wärmesenke 50 (Kondensator) in thermischem Kontakt. Jede bekannte Wärmesenke kann verwendet werden. Die Wärmesenke 50 kann beispielsweise durch Kühlrippen oder ähnliches gebildet werden, die sich vorzugsweise in einem natürlichen oder geschaffenen Luftstrom befinden. Insbesondere kann ein Luftstrom als Konvektionsstrom durch die Erwärmung der Wärmesenke 50 erzeugt werden. Die Wärmesenke 50 kann integral mit der Umwandung 30 oder mit einem Teil der Umwandung geformt sein. Alternativ zur Kühlrippenanordnung können auch andere Vorrichtungen zur Wärmeabgabe, beispielsweise Wärmetauscher, eingesetzt werden. Auch eine forcierte Kühlung ist hier denkbar, beispielsweise mittels Ventilatoren.

Das in dem inneren Volumen 22 befindliche Kühlmittel 26 ist zumindest teilweise flüssig. Für eine gute Wärmeableitung von der Kontaktwand 32 ist es vorteilhaft, wenn das Kühlmittel im Bereich der Kontaktwand 32 flüssig ist und sie zumindest benetzt. Durch Aufnahme von Wärme der Wärmequelle 10 über die Kontaktwand 32 wird ein Teil des Kühlmittels 26 verdampft. Der Kühlmitteldampf steigt in die Nähe der Wärmesenke (Kondensator) 50 auf und führt dabei Wärmeenergie mit sich. Unter Abgabe von Wärme an die Wärmesenke 50 kondensiert das Kühlmittel 26. Das kondensierte, d.h. verflüssigte Kühlmittel 27 läuft in den Verdampfer zurück. Ein ähnlicher Wärmesiphon ist in der Patentanmeldung EP 04405704.0 beschrieben, welche durch Bezugnahme in die vorliegende Anmeldung aufgenommen.

Der für die Kühlwirkung relevante Wärmefluss ist in Fig. 1 durch dicke schwarze Pfeile zusammengefasst. Der Wärmefluss verläuft wie folgt: Die Wärme wird von der Oberfläche 12 der Wärmequelle 10 auf die Kontaktwand 32 des Wärmesiphons 3 übertragen, von dort in einen oberen Bereich des Wärmesiphons geleitet, und dann an die Wärmesenke 50 geleitet.

In dem beschriebenen Thermosiphon findet der Rücktransport des kondensierten Kühlmittels vorwiegend durch die Gravitation statt, da ein monotones Gefälle zwischen Kondensator und Verdampfer besteht. Allgemeiner kann ein Wärmerohr (auch als Heat Pipe bekannt) verwendet werden, wobei auch andere Mittel zur Rückführung des Kühlgases vom Kondensator zum Verdampfer vorgesehen sind, z.B. durch Kapillarkräfte.

Vorteilhaft ist das Wärmerohr gasdicht (hermetisch) geschlossen, so dass ein geschlossener Kreislauf darin entstehen kann. Eine längliche oder röhrenartige Form des Wärmerohrs ist vorteilhaft, aber nicht notwendig. Das beschriebene Wärmerohr ist eine passive Kühlvorrichtung. Es bedarf keiner Stromzufuhr oder einer anderen Versorgung. Als ein Kühlsystem mit einem hermetisch geschlossenen Kreislauf bedarf es in der Regel keiner Wartung und kann im allgemeinen über Jahre und Jahrzehnte wartungsfrei funktionieren.

Figuren 2a und 2b zeigen jeweils eine Querschnittsansicht eines elektrischen Betriebsmittels 1 mit daran befestigter Kühleinrichtung 3. Das in Fig. 2a und 2b dargestellte elektrische Betriebsmittel 3 ist ein Generatorschalter für jeweils einen Schalterpol eines Generators. Jeder der Schalterpole weist einen rohrförmigen Innenleiter 10 auf, welcher von je einem gehäuseartigen Schalter-Aussenleiter 2 umgeben ist. Im Betriebsfalle liegt zwischen dem Innenleiter 10 und dem jeweiligen Aussenleiter 2 eine Hochspannung an, wobei der Aussenleiter 2 auf Erdpotential G liegt. Der Aussenleiter kann auch als Gehäuse des elektrischen Betriebsmittels bezeichnet werden.

An dem Innenleiter 10 und an dem Aussenleiter 2 entsteht bei Betrieb Verlustwärme. Die Wärme entsteht im Wesentlichen durch ohmsche Verluste. Es können auch weitere Verluste hinzukommen, z.B. solche durch den Skineffekt, oder Wirbelstrom- und Hystereseverluste. Der Aussenleiter 2 erwärmt sich relativ wenig, da er einen grösseren Querschnitt aufweist und der Umgebungsluft ausgesetzt ist. Für den Innenleiter 10 gilt dies jedoch nicht. Daher ist es zum Erreichen hoher Betriebsströme vorteilhaft, eine Kühleinrichtung für den Innenleiter 10 zur Verfügung zu stellen, wie in Fig. 2a und 2b gezeigt ist. Die Kühlungeinrichtung ist vorzugsweise so ausgelegt, dass der Hochleistungsschalter im Allgemeinen nicht wärmer als 105 oder höchstens 120°C wird.

Die Kühleinrichtung wird durch ein Wärmerohr (insbesondere einen Thermosiphon) 3 gebildet, wie es in Fig. 1 beschrieben ist. Die Beschreibung von Fig. 1 gilt somit im Wesentlichen auch für Fig. 2a und 2b, und gleiche Bezugszeichen bezeichnen funktionell ähnliche Teile.

Das in Figur 2a dargestellte Wärmerohr 3 weist zwei im wesentlichen hohlzylindersegmentförmige metallische Verdampfer 20 auf, deren Form an die Gestalt des Innenleiters 10 angepasst ist. Die inneren Volumina der beiden Verdampfer sind durch zum Wärmerohr 3 gehörende vorzugsweise metallische Rohre miteinander verbunden. Die Rohre sind weiterhin mit einem Kondensator 50 verbunden. Der Kondensator 50 weist eine vorzugsweise metallische Kühlrippenanordnung auf, welche auf dem Aussenleiter befestigt ist. In dem Kondensator kann sich das gasförmige Arbeitsmedium ausbreiten kann, um dann nach Wärmeabgabe zu kondensieren (siehe Fig. 1). Somit erstreckt sich die Kühleinrichtung in ein Äusseres des elektrischen Betriebsmittels.

Die in Figur 2b dargestellte Kühleinrichtung ist der Kühleinrichtung von Figur 2a ähnlich, und gleiche Bezugszeichen bezeichnen funktionell ähnliche Teile. Der in Figur 2b dargestellte Verdampfer weist jedoch zwei mal zwei im wesentlichen hohlzylindersegmentförmige metallische Verdampfer 20 mit einer Kontaktfläche auf, deren Form an die Gestalt der Oberfläche des Innenleiters 10 angepasst ist. Diese Elemente sind durch vorzugsweise metallische Rohre miteinander und mit dem Kondensator 50 verbunden.

Statt der in Fig. 2a und 2b dargestellten 2 bzw. 4 Elemente kann das Wärmerohr 3 auch 1,3,5,6,7,8 oder mehr Elemente aufweisen, die Wärme des Innenleiters 10 aufnehmen. Es kann mehr als ein Wärmerohr an dem Innenleiter 10 angebracht sein, um die Kühlleistung zu erhöhen. Beispielsweise kann der Innenleiter 10 mehrere Abschnitte aufweisen, die jeweils mit mindestens einem Wärmerohr versehen sind.

In vielen Anwendungsfällen wird die Kühlleistung insbesondere durch die Güte des thermischen Kontakts zwischen der Wärmequelle 10 und der Kontaktwand 30 der Kühleinrichtung 3 begrenzt. Daher ist es vorteilhaft, einen thermisch möglichst leitfähigen Kontakt zwischen diesen Teilen sicherzustellen, der mit einem dichten Kühlmitteleinschluss verträglich ist.

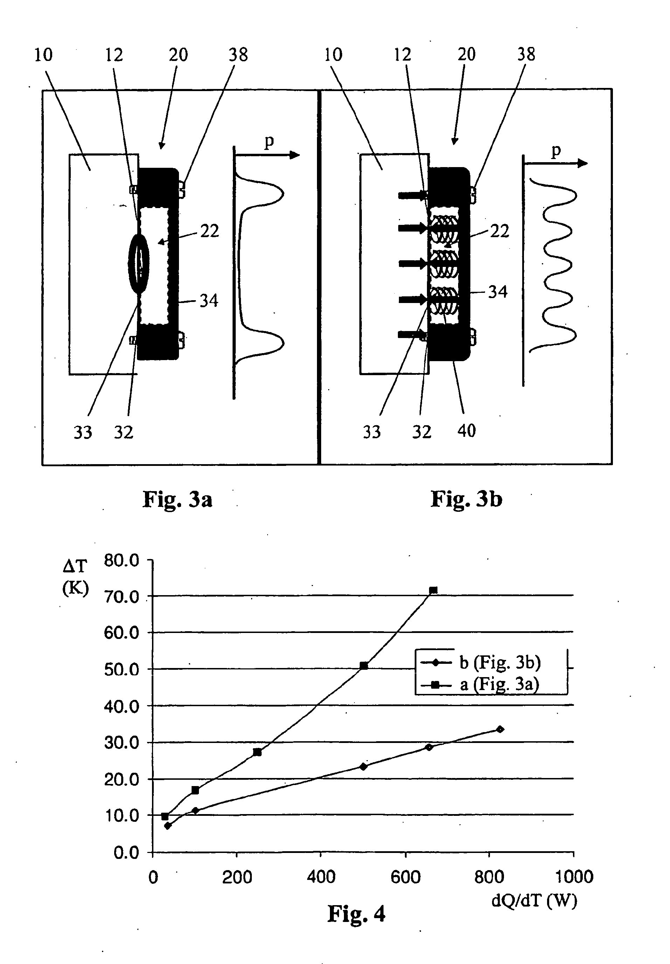

Die Schwierigkeiten beim Herstellen eines thermisch möglichst leitfähigen Kontakts sind in Figur 3a illustriert. Darin ist ein nicht erfindungsgemässer Verdampfer 20 eines Wärmesiphons dargestellt. Der Wärmesiphon entspricht dem in den vorangehenden Figuren gezeigten Aufbau, und gleiche Bezugszeichen bezeichnen funktionell ähnliche Teile. Der Verdampfer 20 ist mit Befestigungsschrauben 38 an einer Wärmequelle 10 befestigt, so dass die Kontaktfläche 32 des Verdampfers auf der zu kühlenden Oberfläche 12 der Wärmequelle aufliegt. Jedoch wird ein fester Druckkontakt zwischen einer Kontaktfläche 33 der Kontaktwand 32 und der zu kühlenden Oberfläche 12 nur in dem Bereich der Befestigungsschrauben 38 sichergestellt. Andere Bereiche der Kontaktfläche 33 werden nicht an die zu kühlende Oberfläche angedrückt.

In dem Druck-Diagramm rechts in Fig. 3a ist der Anpressdruck als Funktion der vertikalen Position in der Querschnittsebene dargestellt. Das Diagramm verdeutlicht, dass ein hoher Anpressdruck nur im Bereich der Befestigungsschrauben vorliegt, aber nicht in dem zwischen den Befestigungsschrauben liegenden Bereich, der links in Fig. 3a mit einer Ellipse hervorgehoben ist. Der zwischen den Befestigungsschrauben liegende Bereich ist jedoch der für die Wärmeübertagung entscheidende Bereich, da in diesem Bereich die Kontaktwand 32 dünn und folglich besonders wärmeleitend ist. Aufgrund des niedrigen Anpressdrucks ist in diesem Bereich der thermische Kontakt stark reduziert. Insbesondere begünstigt der niedrige Anpressdruck die Bildung von wärmeisolierenden Luftpolstern, z.B. falls Fertigungstoleranzen oder mikroskopische Unebenheiten vorliegen. Solche Luftpolster können darüber hinaus auch bei betriebsbedingten Schwankungen etwa des Drucks im inneren Volumen 22 entstehen, denn solche und ähnliche Schwankungen können eine unerwünschte Bewegung der Kontaktwand 32 und somit eine Änderung des flächigen Kontakts zur Folge haben.

Um den gewünschten flächigen Kontakt herzustellen, ist es vorteilhaft, Wärmeleitpaste zwischen der zu kühlenden Oberfläche 12 und der Kantaktfläche der Kontaktwand 32 zu applizieren, jedoch kann dies unter Umständen nicht ausreichend oder nicht genügend langzeitstabil sein. Das Anbringen zusätzlicher Befestigungsschrauben ist in diesem Bereich in der Regel mit Einbussen bezüglich der Abdichtung des inneren Volumens 22 verbunden.

In Figur 3b ist ein erfindungsgemässer Verdampfer 20 eines Wärmesiphons dargestellt. Zusätzlich zu den Merkmalen von Figur 3a weist dieser Verdampfer Anpressfedern 40 auf. Die Anpressfedern 40 üben einen flächigen, d.h. über die Fläche verteilten Anpressdruck auf die Kontaktwand 32 aus. Dadurch wird die Kontaktwand 32 mechanisch vorgespannt, so dass sie gegen die zu kühlende Oberfläche 12 gedrückt wird. Somit wird ein flächiger Kontakt zwischen der Kontaktfläche 33 und der zu kühlenden Oberfläche 12 erzeugt. Der Anpressdruck ist in Fig. 3b symbolisch als gegeneinander gerichtete Paare von Pfeilen dargestellt. Der Anpressdruck ist auch in dem Druck-Diagramm rechts in Fig. 3b dargestellt. Das Druck-Diagramm zeigt, dass im Gegensatz zu dem Verdampfer von Fig. 3a auch in dem Bereich der Kontaktwand, der zwischen den Befestigungsschrauben 38 liegt, ein Anpressdruck erzeugt wird.

Die Anpressfedern 40 sind im Inneren des Verdampfers 20 befestigt, d.h. in dem Volumen 22, in dem sich das Kühlmittel befindet. Sie übertragen einen Anpressdruck bzw. eine Anpresskraft auf die Kontaktwand 32, wie oben beschrieben ist. Sie übertragen auch einen entsprechenden Gegendruck bzw. eine Gegenkraft auf die zur Kontaktwand 32 entgegengesetzte Rückwand 34 des Verdampfers 20.

Die Verteilung der Anpressfedem 40 oder sonstiger Anpressmittel kann variiert werden. Unabhängig von der gezeigten Ausführungsform sollte eine möglichst gleichmässige Verteilung des Anpressdrucks über die Kontaktfläche angestrebt werden. Hierzu ist, je nach Form der Kontaktfläche, eine hexagonale oder eine quadratische Verteilung der Anpressfedern oder der sonstigen Anpressmittel über die Kontaktwand besonders geeignet.

Unabhängig von der gezeigten Ausführungsform besteht die Kontaktwand aus einem wärmeleitenden Material, das beispielsweise ein Metall wie Aluminium, Kupfer, oder Stahl enthält. Sie ist möglichst dünn, um eine gute Wärmeleitfähigkeit zu erzielen, und je nach Material beispielsweise dünner als 20 mm, dünner als 10 mm oder dünner als 5 mm oder sogar dünner als 2mm.

Unabhängig von der gezeigten Ausführungsform kann die Kontaktfläche mit einem Material beschichtet sein, das weicher als das Basismaterial ist, z.B. mit Silber. Auf diese Weise können kleine Unebenheiten der Kontaktfläche oder der zu kühlenden Oberfläche ausgeglichen werden.

Wie in Fig. 3a und 3b gezeigt ist, erzeugen auch die Befestigungsschrauben 40 einen Anpressdruck. Dieser Anpressdruck wird jedoch erzeugt, ohne dass die Kontaktwand 32 vorgespannt wird. Die Befestigungsschrauben 38 erzeugen somit insbesondere keine kraftschlüssige Verbindung zwischen der zu kühlenden Oberfläche 12 und der Kontaktfläche 33 der Kontaktwand 32.

Beim Betrieb des elektrischen Betriebsmittels wird das Kühlmittel erwärmt. Dabei steigt der Gasdruck im Volumen 22 in der Regel an, zumindest wenn das Volumen gasdicht abgeschlossen ist. Auch dieser Gasdruck kann einen Anpressdruck zwischen der zu kühlenden Oberfläche 12 und der Kontaktfläche 33 erzeugen. Der Gasdruck hängt empfindlich von den jeweiligen Betriebsbedingungen ab und ist somit starken Schwankungen unterworfen. In manchen Ausführungsformen kann der Gasdruck zwischen einem Minimaldruck von 1 bar (Normaldruck) und 1,5 bar, 2 bar oder sogar 3 bar schwanken.

Ein Anpressmittel kann auch dadurch zur Verfügung gestellt werden, dass das Kühlmittelvolumen mit einem Überdruck (z.B. einem Gasdruck von 2 bar) beaufschlagt wird. In diesem Fall liegt keine mechanische Vorspannung vor. Eine mechanische Vorspannung hat den Vorteil, dass sie in der Regel relativ unabhängig von den jeweiligen Temperaturen im Kühlmittelvolumen ist.

Unabhängig von der gezeigten Ausführungsform liegt der Druck des Kühlmittels und / oder der Druck im Inneren der Umwandung bei vorgesehenen Betriebsbedingungen typischerweise nicht unterhalb eines Minimaldrucks (hier 1 bar). Der Anpressdruck ist dann vorzugsweise grösser und optional um mehr als 0,2 bar oder um 0,5 bar grösser als die Differenz zwischen dem Druck der Umgebung, etwa der Umgebungsluft, und dem Minimaldruck. In Ausführungsformen beträgt der Anpressdruck des Anpressmittels mehr als 0,5 bar, typischerweise sogar mehr als 1 bar oder mehr als 2 bar.

Unabhängig von der gezeigten Ausführungsform ist die Kontaktwand mechanisch vorgespannt. Somit wird auch dann ein Anpressdruck der Kontaktfläche gegen die zu kühlende Oberfläche erzeugt, wenn der Druck (Gasdruck oder ein ähnlicher insbesondere nicht-mechanischer Druck) im Inneren der Umwandung nicht grösser ist als der Druck ausserhalb der Umwandung. Unter einer mechanischen Vorspannung wird hier eine mit Mitteln der technischen Mechanik erreichte Vorspannung verstanden, also eine Vorspannung, die beispielsweise auf elastischen Eigenschaften des Anpressmittels oder auf hierzu äquivalenten Effekten beruht.

Figur 4 zeigt ein Messdiagramm, das einen Vergleich zwischen der Kühlwirkung der Kühleinrichtungen von Figur 3a, d.h. ohne Anpressfedern (Kurve "a") und von Figur 3b, d.h. mit Anpressfedern (Kurve "b") erlaubt. Auf der horizontalen Achse des Messdiagramms ist die Wärmeleistung der in Fig. 3a und 3b gezeigten Wärmequelle 10 dargestellt. Als Wärmequelle wurde hierbei ein elektrischer Heizblock gewählt. Auf der vertikalen Achse ist die Temperaturdifferenz zwischen einem Punkt im Inneren der Wärmequelle und einem Punkt auf der zu kühlenden Oberfläche 12 aufgetragen. Diese Grösse ist ein direktes Mass für die thermische Kontakt-Leitfähigkeit der jeweiligen Kühleinrichtung. In guter Näherung ist die Temperaturdifferenz in dem gemessenen Temperaturbereich porportional zur thermischen Kontakt-Leitfähigkeit zwischen der zu kühlenden Oberfläche 12 und der Kantaktfläche 33. Figur 4 zeigt, dass durch die Anpressfedern die thermische Kontakt-Leitfähigkeit um ca. den Faktor 2 verbessert wird.

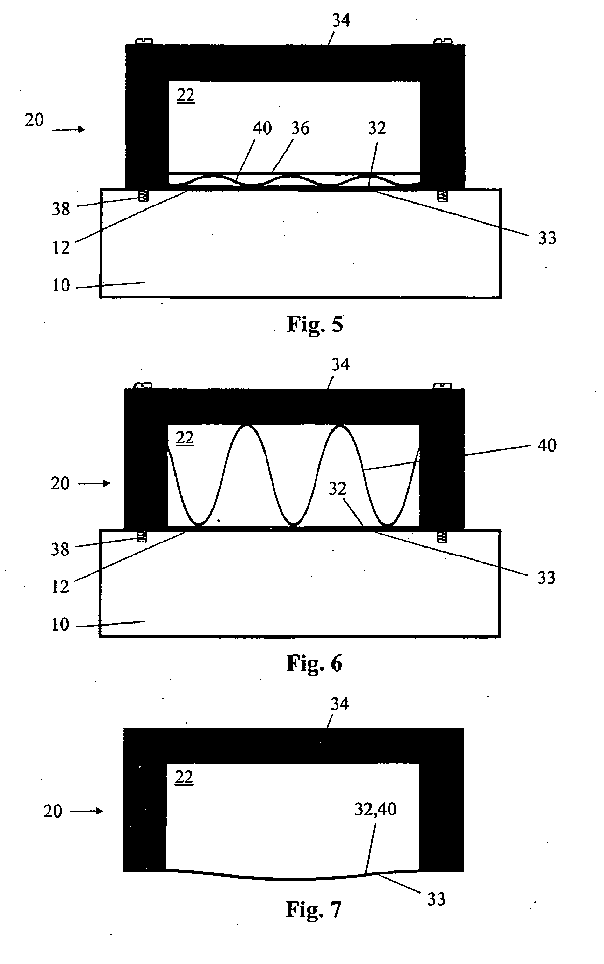

Die Figuren 5 bis 7 zeigen schematische Ansichten weiterer erfindungsgemässer Kühleinrichtungen. Es ist, wie auch in Fig. 3a und 3b, jeweils nur der Bereich des Verdampfers 22 dargestellt. Der übrige Teil der Kühleinrichtung könnte wie in Fig. 1 und 2 gestaltet sein. Gleiche Bezugszeichen bezeichnen zu den Kühleinrichtungen der vorangehenden Figuren funktionell ähnliche Teile.

In der in Figur 5 gezeigten Ausführungsform ist die Anpressfeder 40 als Blattfeder realisiert. Die Blattfeder kann aus mehreren schmalen Elementen oder aus einem gitterähnlichen Material bestehen, so dass eine Kühlmittelzirkulation von und zu der Kontaktwand 32 möglich ist. Die Gegenkraft zu der Anpresskraft wird in Fig. 5 durch einen Steg 36 erzeugt, der seitlich an der Umwandung des Verdampfers 20 befestigt ist. Auch in der in Figur 6 gezeigten Ausführungsform ist die Anpressfeder 40 als Blattfeder realisiert.

In der in Fig. 7 gezeigten Ausführungsform ist die Kontaktwand 32 nach aussen gekrümmt und somit mechanisch vorgeformt, um eine Vorspannung in Richtung der zu kühlenden Fläche zu erzeugen. Die Krümmung der Kontaktwand ist in Figur 7 übertrieben dargestellt. Durch die Vorformung der Kontaktwand 32 wird beim Befestigen des Verdampfers an der Wärmequelle ein Anpressdruck an die zu kühlende Oberfläche und eine kraftschlüssige Verbindung ermöglicht. Somit weist die in Fig. 7 gezeigte Kühleinrichtung ein Anpressmittel auf, welches durch die Vorformung der Kontaktwand 32 realisiert ist.

Die gezeigten Ausführungsformen können weiter variiert werden, ohne dass der in den Ansprüchen definierte Schutzumfang verlassen wird. Beispielsweise kann eine beliebige Kühlung durch ein Kühlmittel verwendet werden, egal ob es sich um eine passive oder um eine aktive Kühlung handelt. Die Erfindung ist somit auch für eine Wasserkühlung oder eine sonstige Kühlung durch einen Flüssigkeits- oder Kühlgasstrom, egal ob mit oder ohne Pumpe bzw. Ventilator, geeignet.

Die Erfindung wurde anhand einer Kühlung eines Generatorschalters beschrieben. Allgemeiner bezieht sie sich auf beliebige elektrische Betriebsmittel, etwa auch auf Schalter, auf Transformatoren oder auf Überspannungsableiter. Beispielsweise kann das elektrische Betriebsmittel ein Leistungsschalter, insbesondere ein Hochleistungsschalter beispielsweise einer Hochspannungsanlage sein. Die Kühlung kann ferner nicht nur für elektrische Betriebsmittel wie den gezeigten Generatorschalter, sondern für elektrische oder sonstige Geräte jeder Art verwendet werden.

### Bezugszeichenliste

- 1: Elektrisches Betriebsmittel
- 2: Gehäuse des elektrischen Betriebsmittels
- 3: Kühleinrichtung
- 10: Wärmequelle
- 12: Zu kühlende Oberfläche
- 20: Verdampfer
- 22: Inneres Volumen
- 26: Kühlmittel
- 27: Kondensiertes Kühlmittel
- 30: Umwandung
- 32: Kontaktwand
- 33: Kontaktfläche
- 34: Gegenüberliegende Wand
- 36: Steg
- 38: Befestigungsmittel
- 40: Vorspannelement
- 50: Wärmesenke / Vorrichtung zur Wärmeabgabe an die Umgebung

## Patentansprüche

1. Kühleinrichtung (3) für ein elektrisches Betriebsmittel (1), das eine zu kühlende Oberfläche (12) aufweist; die Kühleinrichtung (3) umfasst
- ein Kühlmittel (26),
- eine Umwandung (30), deren Inneres ein Volumen (20) für das Kühlmittel (26) definiert,
- eine Befestigung (38) zum Befestigen der Kühleinrichtung (3) an dem elektrischen Betriebsmittel (1), und
- ein Anpressmittel (40), wobei
die Umwandung (30) eine wärmeleitende Kontaktwand (32) mit einer Kontaktfläche (33) aufweist, die für einen flächigen Kontakt mit der zu kühlenden Oberfläche (12) gestaltet ist, und wobei
das Anpressmittel (40) die Kontaktwand (32) mechanisch vorspannt, um einen flächigen Anpressdruck der Kontaktfläche gegen die zu kühlende Oberfläche zu erzeugen, wenn die Kühleinrichtung an dem elektrischen Betriebsmittel befestigt ist.

2. Kühleinrichtung gemäss Anspruch 1, wobei die Kontaktwand (32) einen flexiblen (federnden) Bereich mit einer variablen Auslenkung aufweist, und wobei das Anpressmittel (40) auf den flexiblen Bereich wirkt.

3. Kühleinrichtung gemäss Anspruch 1 oder 2, wobei das Anpressmittel (40) eine Feder ist.

4. Kühleinrichtung gemäss Anspruch 3, wobei das Anpressmittel (40) in dem Volumen (22) für das Kühlmittel (26) angeordnet ist oder an das Volumen für das Kühlmittel unmittelbar angrenzt.

5. Kühleinrichtung gemäss einem der vorangehenden Ansprüche, wobei die Kontaktwand (32) ein Basismaterial und eine Beschichtung aufweist, und wobei die Beschichtung weicher als das Basismaterial ist.

6. Kühleinrichtung gemäss einem der vorangehenden Anspruche, wobei das Anpressmittel (40) angeordnet ist, um einen Gegendruck zu dem Anpressdruck auf die Umwandung (30) zu übertragen.

7. Kühleinrichtung gemäss einem der vorangehenden Ansprüche, wobei das elektrische Betriebsmittel ein Leistungsschalter ist.

8. Kühleinrichtung gemäss einem der vorangehenden Ansprüche, wobei die Kühleinrichtung ein Wärmerohr ist und einen Verdampfer (20) zum Verdampfen des Kühlmittels (26) enthält, und wobei die Umwandung des Verdampfers (20) die Kontaktwand (32) aufweist, weiterhin umfassend
einen mit dem Verdampfer verbundenen Kondensator (50) zum Kondensieren des Kühlmittels (26), der eine Vorrichtung zur Wärmeabgabe an die Umgebung aufweist.

9. Kühleinrichtung gemäss einem der vorangehenden Ansprüche, wobei das Innere der Umwandung (30) von der Umgebung gasdicht abgeschlossen ist.

10. Kühleinrichtung gemäss einem der vorangehenden Ansprüche, die eine passive Kühleinrichtung ist.

11. Kühleinrichtung gemäss einem der vorangehenden Ansprüche, wobei ein durch das Anpressmittel (40) auf die Kontaktwand ausgeübter Druck eine geringere Temperaturabhängigkeit als der Gasdruck eines im Inneren der Umwandung (30) befindlichen Gases aufweist.

12. Elektrisches Betriebsmittel (1) mit einer daran befestigten Kühleinrichtung (3) gemäss einem der vorangehenden Ansprüche.

13. Verfahren zur Herstellung einer Kühleinrichtung (3) für ein elektrisches Betriebsmittel (1), das eine zu kühlende Oberfläche (12) aufweist, umfassend die folgenden Schritte:
- Eine Umwandung (30) mit einer wärmeleitenden Kontaktwand (32) wird gebildet,
- eine Befestigung (38) zum Befestigen der Kühleinrichtung (3) an dem elektrischen Betriebsmittel (1) wird gebildet;
- eine Kontaktfläche (33) der Kontaktwand (32) wird so gestaltet, dass sie einen flächigen Kontakt der Kontaktfläche (33) mit der zu kühlenden Oberfläche (12) erlaubt,
- die Kontaktwand (32) wird durch ein Anpressmittel (40) so vorgespannt, dass ein Anpressdruck der Kontaktfläche (33) gegen die zu kühlende Oberfläche (12) erzeugt werden kann, wenn die Kühleinrichtung (3) an dem elektrischen Betriebsmittel (1) befestigt ist, und
- ein Kühlmittel (26) wird in einem durch das Innere der Umwandung (30) definierten Volumen (22) zur Verfügung gestellt.

## Claims

1. Cooling device (3) for an electrical operating means (1), which has a surface (12) to be cooled; the cooling device (3) comprises
- a coolant (26),
- a peripheral wall (30), whose interior defines a volume (20) for the coolant (26),
- a fastening (38) for fastening the cooling device (3) to the electrical operating means (1), and
- a contact-pressure means (40),
the peripheral wall (30) having a thermally conductive contact wall (32) with a contact face (33), which is designed for areal contact with the surface (12) to be cooled, and
the contact-pressure means (40) mechanically prestressing the contact wall (32) in order to produce an areal contact pressure of the contact face against the surface to be cooled when the cooling device is fastened to the electrical operating means.

2. Cooling device according to Claim 1, the contact wall (32) having a flexible (resilient) region with a variable deflection, and the contact-pressure means (40) acting on the flexible region.

3. Cooling device according to Claim 1 or 2, the contact-pressure means (40) being a spring.

4. Cooling device according to Claim 3, the contact-pressure means (40) being arranged in the volume (22) for the coolant (26) or directly adjoining the volume for the coolant.

5. Cooling device according to one of the preceding claims, the contact wall (32) having a base material and a coating, and the coating being softer than the base material.

6. Cooling device according to one of the preceding claims, the contact-pressure means (40) being arranged in order to transfer a counterpressure to the contact pressure onto the peripheral wall (30).

7. Cooling device according to one of the preceding claims, the electrical operating means being a circuit breaker.

8. Cooling device according to one of the preceding claims, the cooling device being a heat pipe and containing an evaporator (20) for evaporating the coolant (26), and the peripheral wall of the evaporator (20) having the contact wall (32), furthermore comprising
a condenser (50) for condensing the coolant (26), which condenser is connected to the evaporator and has an apparatus for emitting heat to the surrounding environment.

9. Cooling device according to one of the preceding claims, the interior of the peripheral wall (30) being sealed off in a gas-tight manner from the surrounding environment.

10. Cooling device according to one of the preceding claims which is a passive cooling device.

11. Cooling device according to one of the preceding claims, a pressure exerted by the contact-pressure means (40) onto the contact wall having a lower temperature dependence than the gas pressure of a gas located in the interior of the peripheral wall (30).

12. Electrical operating means (1) having a cooling device (3) fastened to it according to one of the preceding claims.

13. Method for producing a cooling device (3) for an electrical operating means (1), which has a surface (12) to be cooled, comprising the following steps:
- a peripheral wall (30) with a thermally conductive contact wall (32) is formed,
- a fastening (38) for fastening the cooling device (3) to the electrical operating means (1) is formed,
- a contact face (33) of the contact wall (32) is designed such that it permits areal contact of the contact face (33) with the surface (12) to be cooled,
- the contact wall (32) is prestressed by a contact-pressure means (40) in such a way that a contact pressure of the contact face (33) against the surface (12) to be cooled can be produced when the cooling device (3) is fastened to the electrical operating means (1), and
- a coolant (26) is made available in a volume (22) defined by the interior of the peripheral wall (30).

## Revendications

1. Dispositif de refroidissement (3) pour un appareillage électrique (1) qui présente une surface (12) à refroidir, le dispositif de refroidissement (3) comprenant :
un agent de refroidissement (26),
une enceinte (30) dont l'intérieur définit un volume (20) pour l'agent de refroidissement (26),
une fixation (38) qui fixe le dispositif de refroidissement (3) sur l'appareillage électrique (1) et
un moyen de poussée (40),
la enceinte (30) présentant une paroi de contact (32) conductrice de la chaleur et dotée d'une surface de contact (33) configurée pour permettre un contact de surface avec la surface (12) à refroidir et
le moyen de poussée (40) précontraignant mécaniquement la paroi de contact (32) à exercer une poussée de surface sur la surface de contact en direction de la surface à refroidir lorsque le dispositif de refroidissement est fixé sur l'appareillage électrique.

2. Dispositif de refroidissement selon la revendication 1, dans lequel la paroi de contact (32) présente une partie flexible (élastique) à déviation variable et dans lequel le moyen de poussée (40) agit sur la partie flexible.

3. Dispositif de refroidissement selon les revendications 1 ou 2, dans lequel le moyen de poussée (40) est un ressort.

4. Dispositif de refroidissement selon la revendication 3, dans lequel le moyen de poussée (40) est disposé dans le volume (22) prévu pour l'agent de refroidissement (26) ou est directement adjacent au volume prévu pour le moyen de refroidissement.

5. Dispositif de refroidissement selon l'une des revendications précédentes, dans lequel la paroi de contact (32) présente un matériau de base et un revêtement, le revêtement étant plus déformable que le matériau de base.

6. Dispositif de refroidissement selon l'une des revendications précédentes, dans lequel le moyen de poussée (40) est disposé de manière à transmettre à l'enceinte (30) une contre-pression exercée sur le moyen de poussée.

7. Dispositif de refroidissement selon l'une des revendications précédentes, dans lequel l'appareillage électrique est un commutateur de puissance.

8. Dispositif de refroidissement selon l'une des revendications précédentes, dans lequel le dispositif de refroidissement est un tube thermique et contient un évaporateur (20) qui évapore l'agent de refroidissement (26), la enceinte de l'évaporateur (20) présentant la paroi de contact (32), et comprenant en outre un condenseur (50) relié à l'évaporateur et qui condense l'agent de refroidissement (26), le condenseur présentant un dispositif de dissipation de la chaleur dans l'environnement.

9. Dispositif de refroidissement selon l'une des revendications précédentes, dans lequel l'intérieur de l'enceinte (30) est séparé de l'environnement de manière étanche aux gaz.

10. Dispositif de refroidissement selon l'une des revendications précédentes, qui est un dispositif de refroidissement passif.

11. Dispositif de refroidissement selon l'une des revendications précédentes, dans lequel la dépendance vis-à-vis de la température de la poussée exercée par le moyen de poussée (40) sur la paroi de contact est moindre que celle de la pression du gaz situé à l'intérieur de l'enceinte (30).

12. Appareillage électrique (1) sur lequel est fixé un dispositif de refroidissement (3) selon l'une des revendications précédentes.

13. Procédé de fabrication d'un dispositif de refroidissement (3) pour un appareillage électrique (1) qui présente une surface (12) à refroidir, comprenant les étapes suivantes :
former une enceinte (30) dotée d'une paroi de contact (32) thermiquement conductrice,
former une fixation (38) qui fixe le dispositif de refroidissement (3) sur l'appareillage électrique (1),
configurer une surface de contact (33) de la paroi de contact (32) de telle sorte qu'elle permette un contact de surface entre la surface de contact (33) et la surface (12) à refroidir,
précontraindre la paroi de contact (32) par un moyen de poussée (40) de manière à pouvoir exercer par la surface de contact (33) une poussée contre la surface (12) à refroidir lorsque le dispositif de refroidissement (3) est fixé sur l'appareillage électrique (1) et
prévoir un agent de refroidissement (26) dans le volume (22) défini par l'intérieur de l'enceinte (30).
